# EUROPEAN PATENT APPLICATION

(11) **EP 4 549 528 A1**
(43) Date of publication of application: **07.05.2025**
(21) Application number: 23831261.5
(22) Date of filing: 22.06.2023
(51) Int. Cl.: C09J 4/02, B32B 27/30, B32B 37/12, C09J 175/04

(54) **ACTIVE ENERGY RAY-CURABLE ADHESIVE, AND METHOD FOR PRODUCING LAMINATE**

(30) Priority: 29.06.2022 JP 2022104227; 22.12.2022 JP 2022205297
(71) Applicant: Toray Industries, Inc., Tokyo 103-8666 (JP)
(72) Inventor: TSUJI Yuichi, Otsu-shi, Shiga 520-8558 (JP); ITO Akito, Otsu-shi, Shiga 520-8558 (JP); INOUE Takejiro, Otsu-shi, Shiga 520-8558 (JP)
(74) Representative: Kador & Partner Part mbB
(86) International application number: PCT/JP2023/023113
(87) International publication number: WO 2024/004817

(57) **Abstract**

An object of the present invention is to provide an active energy ray-curable adhesive that is capable of exhibiting adhesion from immediately after active energy ray irradiation thereof to a film that does not have a highly adhesive layer, and also exhibiting sufficient flexibility and adhesion after aging. The present invention provides an active energy ray-curable adhesive including a mono- to tetrafunctional (meth)acrylate (A) having a tertiary amino group, a polyol compound (B), and a polyisocyanate compound (C)

## Description

### TECHNICAL FIELD

The present invention relates to an active energy ray-curable adhesive, and a method for producing a laminate.

### BACKGROUND ART

As the global population increases, demand for flexible packaging, which is mainly used for packaging food and daily necessities, is expected to continue to grow. In flexible packaging, from the viewpoint of protecting contents, improving impact resistance, imparting heat sealability, and the like, a plastic film, a metal foil, a hot-melt film (sealant), or the like that imparts properties required for each use is generally bonded to a film printed material.

Usually, other materials are bonded to a film printed material using a laminate adhesive containing a polyisocyanate component and a polyol component, and a laminate and a packaging printed material having excellent solvent resistance even to a highly polar solvent are obtained (Patent Document 1). However, since such a laminate adhesive contains a large amount of an organic solvent represented by toluene, ethyl acetate, and the like at the time of coating, a large amount of energy is required for drying of the solvent and exhaust treatment, and an environmental load is large. In addition, in recent years, there has been a demand for a reduction in volatile components contained in an adhesive in order to deal with environmental issues and carbon neutral.

### PRIOR ART DOCUMENT

### PATENT DOCUMENTS

Patent Document 1: Japanese Patent No. 5657990
Patent Document 2: Japanese Patent Laid-open Publication No. 8-253736

### SUMMARY OF THE INVENTION

### PROBLEMS TO BE SOLVED BY THE INVENTION

Therefore, as in Patent Document 2, an active energy ray-curable adhesive composition obtained by blending an aromatic acrylic acid ester monomer and a resin has been proposed, and a laminated film is formed by irradiation with an electron beam. However, since films usable for the active energy ray-curable adhesive composition are limited to product numbers having a highly adhesive layer, the active energy ray-curable adhesive composition has a disadvantage of poor versatility.

An object of the present invention is therefore to provide an active energy ray-curable adhesive that is instantaneously cured by irradiation with an active energy ray and is capable of exhibiting adhesion from immediately after active energy ray irradiation thereof to a film that does not have a highly adhesive layer and also exhibiting sufficient adhesion after aging.

### SOLUTIONS TO THE PROBLEMS

The present invention provides an active energy ray-curable adhesive including a mono- to tetrafunctional (meth)acrylate (A) having a tertiary amino group, a polyol compound (B), and a polyisocyanate compound (C).

The present invention also provides a method for producing a laminate, including: bonding two or more kinds of films to each other via the active energy ray-curable adhesive of the present invention to form a laminated film; irradiating the laminated film with an active energy ray; and performing aging in this order.

### EFFECTS OF THE INVENTION

The active energy ray-curable adhesive is instantaneously cured by irradiation with an active energy ray to become tack-free and is capable of exhibiting adhesion from immediately after active energy ray irradiation thereof to a film that does not have a highly adhesive layer and also exhibiting sufficient adhesion after aging.

### EMBODIMENT OF THE INVENTION

Hereinafter, the present invention will be specifically described. In the present invention, "or more" means the same as or more than the numerical value indicated there. In addition, "or less" means the same as or less than the numerical value indicated there. In addition, "(meth)acrylate" is a generic name including an acrylate and a methacrylate, and a "(meth)acryloyl group" is a generic name including an acryloyl group and a methacryloyl group. In addition, "n-functional (meth)acrylate" and "(meth)acrylate is n-functional" mean that the number of (meth)acryloyl groups of the (meth)acrylate is n.

The active energy ray-curable adhesive of the present invention contains a mono- to tetrafunctional (meth)acrylate having a tertiary amino group. Hereinafter, the (meth)acrylate is also referred to as a (meth)acrylate (A).

The (meth)acrylate (A) is cured by irradiation with an active energy ray to form a film, and the tertiary amino group strongly interacts with a polar group such as a hydroxy group, particularly a carboxy group, on the film surface, thereby improving the adhesion of the active energy ray-curable adhesive cured film to the film from immediately after active energy ray irradiation. This is because the adhesion-improving effect is exhibited only by having a tertiary amino group and a (meth)acryloyl group in the same compound. For example, when a tertiary amine having no (meth)acryloyl group and a (meth)acrylate are mixed and cured with an active energy ray, since both compounds are not covalently bonded, the interaction between the (meth)acrylate cross-linked product in the cured film and the film surface is not strengthened, and the adhesion is not improved.

Furthermore, since the tertiary amino group contained in the (meth)acrylate (A) also has a function as a catalyst in the urethane formation reaction between a polyol compound (B) and a polyisocyanate compound (C) described later, there is an effect of accelerating the reaction and shortening the aging time. Furthermore, as compared with the case where a catalyst is simply allowed to coexist, the (meth)acrylate (A) is cured with an active energy ray, so that the (meth)acrylate (A) is covalently incorporated into a cured film, and therefore there is also the advantage that the migration is low.

The (meth)acrylate (A) is preferably monofunctional or bifunctional. When the (meth)acrylate (A) is penta- or higher functional, cure shrinkage of the active energy ray-curable adhesive is large, and adhesion is impaired.

The (meth)acrylate (A) is preferably a compound represented by Structural Formula (1) below.

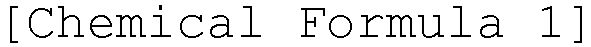

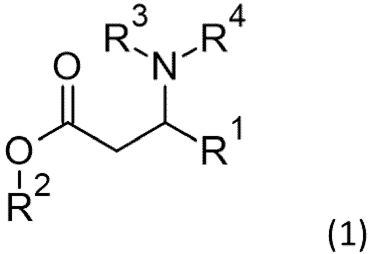

Here, R¹ represents H or a methyl group, R² represents a monovalent organic group having a (meth)acryloyl group, and R³ and R⁴ each independently represent a monovalent hydrocarbon group or a monovalent organic group containing a heteroatom.

The (meth)acrylate (A) is more preferably a compound represented by Structural Formula (2) or (3) below.

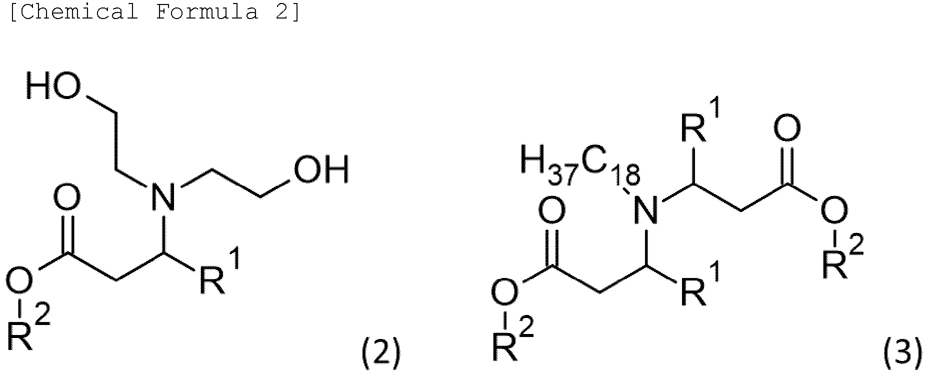

Here, R¹ represents H or a methyl group, and R² represents a monovalent organic group having a (meth)acryloyl group.

The (meth)acrylate (A) is preferably a compound represented by Structural Formula (4) below.

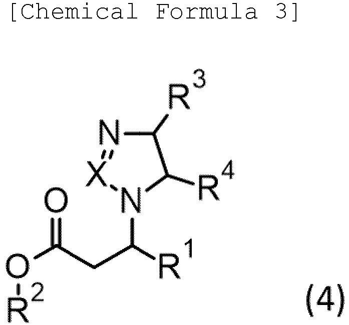

Here, X represents a nitrogen atom or a carbon atom, R¹ represents H or a methyl group, R² represents a monovalent organic group having a (meth)acryloyl group, and R³ and R⁴ each independently represent a monovalent hydrocarbon group or a monovalent organic group containing a heteroatom. R³ and R⁴ are independent of each other or are integrated to form a cyclic group.

The amine value of the (meth)acrylate (A) is preferably 80 mg KOH/g or more for achieving strong interaction with various carboxy groups to improve adhesion. In addition, in order to impart compatibility with other compounds, the amine value of the (meth)acrylate (A) is preferably 400 mg KOH/g or less, more preferably 357 mg KOH/g or less.

Here, the amine value is represented by the number of milligrams of potassium hydroxide equivalent to hydrochloric acid required for neutralizing amino groups contained in 1 g of a sample, and can be measured by a method in accordance with ASTM D2074.

The (meth)acrylate (A) preferably has a hydroxy group. This makes it possible to more effectively improve curability and adhesion by addition to the polyisocyanate compound (C) described later.

The (meth)acrylate (A) is obtained by a Michael addition reaction of a primary or secondary amine to a polyfunctional (meth)acrylate. Since the (meth)acryloyl group is an α-β unsaturated carbonyl compound, a primary or secondary amine is added by 1,4-conjugate addition to form a 3-aminopropionate structure. When the amino group in the structure after the reaction is a secondary amino group, there is the possibility that the amino group is further reacted again to be converted to a tertiary amine. This reaction is a nucleophilic reaction, and the higher the nucleophilicity, the milder the conditions can be in which the reaction proceeds. In addition, an acid and a base can act as catalysts to cause the reaction to proceed at a lower temperature and at a higher speed.

Specifically, in the case of performing a Michael addition reaction, the reaction is preferably performed at a temperature of 20 to 100°C or less. In the reaction between the polyfunctional (meth)acrylate and the amine, when all the (meth)acryloyl groups in one molecule react with the amine, the compound is not cured with active energy rays, so that the equivalent ratio of the (meth)acryloyl groups is preferably more than that of the amino groups. On the other hand, in order to increase the amine equivalent, it is also preferable to introduce a plurality of tertiary amino groups into a tri- or higher functional, preferably tetra- or higher polyfunctional (meth)acrylate. In addition, when a bi- or higher functional polyamine is used as the amine as a raw material, crosslinking with the polyfunctional (meth)acrylate may cause gelation, which is not preferable from the viewpoint of reaction control. In addition, it is preferable to take measures such as gradually adding the amine to the polyfunctional (meth)acrylate by dropping or the like at the time of synthesis because the desired (meth)acrylate (A) can be easily obtained.

When the (meth)acrylate (A) has a hydroxy group, one or both of the use of a polyfunctional (meth)acrylate having a hydroxy group as a raw material and the use of an amine to be added having a hydroxy group may be applied.

As the polyfunctional (meth)acrylate as a raw material for the Michael addition reaction, a (meth)acryloyl group needs to remain even after the reaction, and thus, in principle, a polyfunctional (meth)acrylate is used. A monofunctional (meth)acrylate is unsuitable because a (meth)acryloyl group disappears when Michael addition is performed.

Specific examples of the bifunctional (meth)acrylate as a raw material for the Michael addition reaction include 1,6-hexanediol di(meth)acrylate, 1,9-nonanediol di(meth)acrylate, 1,10-decanediol di(meth)acrylate, bisphenol A di(meth)acrylate, diethylene glycol di(meth)acrylate, triethylene glycol di(meth)acrylate, polyethylene glycol di(meth)acrylate, tripropylene glycol di(meth)acrylate, polypropylene glycol di(meth)acrylate, 1,3-butylene glycol di(meth)acrylate, neopentyl glycol di(meth)acrylate, trimethylolpropane di(meth)acrylate, glycerin di(meth)acrylate, pentaerythritol di(meth)acrylate, diglycerin di(meth)acrylate, ditrimethylolpropane di(meth)acrylate, tricyclodecane dimethanol di(meth)acrylate, and ethylene oxide adducts, propylene oxide adducts, and tetraethylene oxide adducts thereof.

Examples of the trifunctional (meth)acrylate as a raw material for the Michael addition reaction include trimethylolpropane tri(meth)acrylate, pentaerythritol tri(meth)acrylate, ditrimethylolpropane tri(meth)acrylate, glycerin tri(meth)acrylate, isocyanuric acid tri(meth)acrylate, ditrimethylolpropane tri(meth)acrylate, and ethylene oxide adducts, propylene oxide adducts, and tetraethylene oxide adducts thereof.

Examples of the tetrafunctional (meth)acrylate as a raw material for the Michael addition reaction include ditrimethylolpropane tetra(meth)acrylate, diglycerin tetra(meth)acrylate, ditrimethylolpropane tetra(meth)acrylate, and ethylene oxide adducts and propylene oxide adducts thereof.

Examples of the penta- or higher functional (meth)acrylate as a raw material for the Michael addition reaction include dipentaerythritol penta(meth)acrylate, dipentaerythritol hexa(meth)acrylate, and ethylene oxide adducts and propylene oxide adducts thereof. In particular, when a hexa- or higher functional (meth)acrylate is used, it is preferable to set the equivalent ratio such that two or more functional groups react with the amine.

Specific examples of the primary amine as a raw material for the Michael addition reaction include, as the monoamine, an alkylamine having 1 to 20 carbon atoms, an alkanolamine having 1 to 10 carbon atoms, and a derivative thereof. Specific examples of the secondary amine include N-alkyl-substituted products (1 to 20 carbon atoms) of the monoamines, N-alkanol-substituted products (1 to 10 carbon atoms) of the monoamines, cyclic amines such as morpholine, pyrrolidine, and piperidine, derivatives other than these N-substituted products, 1H-azoles such as 1H-triazole, 1H-benzotriazole, 1H-benzimidazole, 1H-imidazole, and 1H-pyrazole, and derivatives obtained by substituting sites other than 1H. These polyamines can also be used, but control for suppressing gelation is required in this case.

Among these primary and secondary amines, amines having faint odor are preferable, and particularly octadecylamine and diethanolamine are also preferable because they can be used as raw materials in laws and regulations related to food packaging represented by Swiss Ordinance and the like.

In addition, adducts of 1H-azoles having a heterocyclic ring, such as 1H-triazole, 1H-benzotriazole, 1H-benzimidazole, and 1H-imidazole, are particularly preferable because of the effect of improving adhesion.

Among these primary and secondary amines, the Michael addition reaction of a highly nucleophilic aliphatic amine proceeds under relatively mild conditions of 20 to 60°C. On the other hand, since the reaction of an aromatic amine having low nucleophilicity proceeds slowly, it is preferable that the Michael addition reaction be performed under heating to 80 to 100°C.

When the (meth)acrylate (A) is synthesized using the particularly preferable diethanolamine described above, a compound represented by Structural Formula (2) above is obtained, and when the (meth)acrylate (A) is synthesized using octadecylamine, a compound represented by Structural Formula (3) above is obtained. When the (meth)acrylate (A) is synthesized using a 1H-azole, a compound represented by Structural Formula (4) above is obtained.

As the (meth)acrylate (A), a commercially available product may be used, and examples thereof include "EBECRYL" (registered trademark) LEO 10101, "EBECRYL" (registered trademark) LEO 10551, "EBECRYL" (registered trademark) LEO 10552, "EBECRYL" (registered trademark) LEO 10553, EBECRYL" (registered trademark) 80, "EBECRYL" (registered trademark) 81, "EBECRYL" (registered trademark) 83, "EBECRYL" (registered trademark) 85, "EBECRYL" (registered trademark) 880, and "EBECRYL" (registered trademark) 7100 manufactured by Daicel-Allnex Ltd., "ETERCURE" (registered trademark) 63922 manufactured by Eternal Materials Co., Ltd., CN549NS, CN550, and CN551NS from Sartomer, "AgiSyn" (registered trademark) 701, "AgiSyn" (registered trademark) 701P, "AgiSyn" (registered trademark) 703, and "AgiSyn" (registered trademark) 703TF from DSM, and "Miramer" (registered trademark) AS1000, "Miramer" (registered trademark) AS3500, "Miramer" (registered trademark) LR3600, Photocryl A104, and Photocryl DP143 manufactured by Miwon Specialty Chemical Co., Ltd.

The molecular weight of the (meth)acrylate (A) is preferably 1,000 or less in the case where no hydroxy group is contained from the viewpoint of improving curability with active energy rays and suppressing an increase in viscosity of the active energy ray-curable adhesive of the present invention. The molecular weight is more preferably 600 or less. On the other hand, in the case where a hydroxy group is contained, the weight-average molecular weight is preferably 3,000 or more and 100,000 or less from the viewpoint of improving curability and adhesion by addition to the polyisocyanate compound (C).

The (meth)acrylate (A) is preferably contained in the active energy ray-curable adhesive in an amount of 10 mass% or more and 40 mass% or less.

When the content of the (meth)acrylate (A) is 10 mass% or more, more preferably 20 mass% or more, film adhesion is improved.

Since the content of the (meth)acrylate (A) is 40 mass% or less, it is possible to cope with the case where another functional material is contained, the case where an initiator or a sensitizer is added according to an active energy ray source, the case where a resin, an oligomer, an auxiliary agent, or the like is added for adjusting the viscoelasticity of the active energy ray-curable adhesive, and the like depending on the application.

The active energy ray-curable adhesive of the present invention contains the polyol compound (B). The polyol compound (B) refers to a compound having two or more hydroxy groups.

Specific examples of the polyol compound (B) include neopentyl glycol, 1,3-butanediol, 1,4-butanediol, tripropylene glycol, tetramethylene glycol, glycerin, trimethylolpropane, pentaerythritol, ditrimethylolpropane, diglycerin, dipentaerythritol, ethylene oxide adducts, propylene oxide adducts, tetraethylene oxide adducts, and lactone adducts.

The polyol compound (B) is preferably a polyester polyol because the heat resistance of the active energy ray-curable adhesive can be improved to impart resistance to a boil or retort treatment.

The polyester structure in the polyester polyol is obtained by reacting a dicarboxylic acid derivative with a diol. Specific examples of the dicarboxylic acid derivative include phthalic acid, isophthalic acid, terephthalic acid, adipic acid, oxalic acid, maleic acid, fumaric acid, and sebacic acid. It is possible to use a polyester polyol in which these dicarboxylic acid derivatives are reacted with diols to form a polyester structure and a terminal thereof is converted into a hydroxy group.

In addition, a polyol compound having a carbonate structure can also be used. Specific examples thereof include pentamethylene carbonate diol, hexamethylene carbonate diol, hexane carbonate diol, and decane carbonate diol. In addition, these polyol compounds can be used singly or in combination of two or more kinds thereof.

The molecular weight of the polyol compound (B) is preferably 500 or more, more preferably 1,000 or more, still more preferably 2,000 or more from the viewpoint of improving adhesion by increasing the molecular weight. On the other hand, the molecular weight of the polyol compound (B) is preferably 10,000 or less, more preferably 7,000 or less, still more preferably 5,000 or less from the viewpoint of enhancing the fluidity of the adhesive and improving the coatability.

The active energy ray-curable adhesive of the present invention contains the polyisocyanate compound (C). The isocyanate compound (C) refers to a compound having two or more isocyanate groups and is a component that is to have a high molecular weight via an addition reaction. In the active energy ray-curable adhesive of the present invention, a polyurethane is formed by mixing and reacting the polyol compound (B) and the polyisocyanate compound (C).

In particular, since the tertiary amino group contained in the (meth)acrylate (A) also has a function as a catalyst in the urethane formation reaction, there is an effect of accelerating the reaction and shortening the aging time. Furthermore, as compared with the case where a catalyst is simply allowed to coexist, the (meth)acrylate (A) is cured by an active energy ray, so that the (meth)acrylate (A) is covalently incorporated into a cured film, and therefore there is also the advantage that the migration is low.

Specific examples of the polyisocyanate compound (C) include toluene diisocyanate, diphenylmethane diisocyanate, xylylene diisocyanate, naphthalene diisocyanate, cyclohexane diisocyanate, isophorone diisocyanate, 4,4-methylenebiscyclohexyl diisocyanate, hydrogenated xylylene diisocyanate, hexamethylene diisocyanate, lysine diisocyanate, and trimethylhexamethylene diisocyanate. A nurate-modified product, an adduct-modified product, a biuret-modified product, an allophanate-modified product, and the like of these polyisocyanate compounds can also be used. These diisocyanates can also be used alone or in combination of two or more thereof.

The weight-average molecular weight of the polyisocyanate compound (C) is preferably 500 or more, more preferably 1,000 or more, still more preferably 2,000 or more from the viewpoint of suppressing elution when the polyisocyanate compound (C) remains in the cured product of the adhesive. On the other hand, the weight-average molecular weight of the polyisocyanate compound (C) is preferably 10,000 or less, more preferably 7,000 or less, still more preferably 5,000 or less from the viewpoint of enhancing the fluidity of the adhesive and improving the coatability.

The total content of the polyol compound (B) and the polyisocyanate compound (C) in the active energy ray-curable adhesive of the present invention is preferably 50 mass% or more, more preferably 60 mass% or more from the viewpoint of improving the adhesion of the final laminated film and further making the cured product of the active energy ray-curable adhesive flexible. The content is preferably 80 mass% or less, more preferably 70 mass% or less in order to reduce curability with active energy rays and the viscosity of the adhesive.

As the equivalent ratio between the polyol compound (B) and the polyisocyanate compound (C), the content of isocyanate groups in the polyisocyanate compound is preferably 0.8 mol or more and 1.2 mol or less with respect to 1.0 mol of hydroxy groups in the polyol compound (B).

When the (meth)acrylate (A) has a hydroxy group, the content of isocyanate groups of the polyisocyanate compound is preferably 0.8 mol or more and 1.2 mol or less with respect to a total of 1.0 mol of hydroxy groups of the (meth)acrylate (A) and hydroxy groups of the polyol compound (B). The closer the equivalent ratio is, the more the chain extension reaction proceeds, the higher the molecular weight of the resulting polyurethane becomes, and the adhesion can be improved.

The active energy ray-curable adhesive of the present invention preferably also contains a polyfunctional (meth)acrylate having a weight-average molecular weight of less than 3,000 and not containing an amino group. Hereinafter, the (meth)acrylate is also referred to as a (meth)acrylate (D). The (meth)acrylate (D) is cured by irradiation with an active energy ray and contributes to film formation.

The (meth)acrylate (D) is preferably one having high reactivity from the viewpoint of curability. From the viewpoint of safety and environment, it is preferable that the volatility be low. The low volatility refers to a weight loss ratio of 1 wt.% or less when heated at 110°C for 1 hour as defined by Method 24 of the United States Environmental Protection Agency (EPA).

Specific examples of a bifunctional (meth)acrylate (D) as the (meth)acrylate (D) include 1,6-hexanediol di(meth)acrylate, 1,9-nonanediol di(meth)acrylate, 1,10-decanediol di(meth)acrylate, bisphenol A di(meth)acrylate, diethylene glycol di(meth)acrylate, triethylene glycol di(meth)acrylate, polyethylene glycol di(meth)acrylate, tripropylene glycol di(meth)acrylate, polypropylene glycol di(meth)acrylate, 1,3-butylene glycol di(meth)acrylate, neopentyl glycol di(meth)acrylate, trimethylolpropane di(meth)acrylate, glycerin di(meth)acrylate, pentaerythritol di(meth)acrylate, diglycerin di(meth)acrylate, ditrimethylolpropane di(meth)acrylate, tricyclodecane dimethanol di(meth)acrylate, and ethylene oxide adducts, propylene oxide adducts, and tetraethylene oxide adducts thereof.

Examples of a trifunctional (meth)acrylate (D) include trimethylolpropane tri(meth)acrylate, pentaerythritol tri(meth)acrylate, ditrimethylolpropane tri(meth)acrylate, glycerin tri(meth)acrylate, isocyanuric acid tri(meth)acrylate, ditrimethylolpropane tri(meth)acrylate, and ethylene oxide adducts, propylene oxide adducts, and tetraethylene oxide adducts thereof.

Examples of a tetrafunctional (meth)acrylate (D) include ditrimethylolpropane tetra(meth)acrylate, diglycerin tetra(meth)acrylate, ditrimethylolpropane tetra(meth)acrylate, and ethylene oxide adducts and propylene oxide adducts thereof.

Examples of a penta- or higher functional (meth)acrylate (D) include dipentaerythritol penta(meth)acrylate, dipentaerythritol hexa(meth)acrylate, and ethylene oxide adducts and propylene oxide adducts thereof.

The active energy ray-curable adhesive of the present invention preferably contains a compound having a weight-average molecular weight of 3,000 or more and 100,000 or less and having a carboxy group. Hereinafter, the compound is also referred to as a compound (E). The tertiary amino group of the (meth)acrylate (A) interacts with the carboxy group of the compound (E) having a high molecular weight to improve the film formability and film strength of the cured film of the active energy ray-curable adhesive.

In the active energy ray-curable adhesive of the present invention, the ratio, n_{c}(E)/nₐ(A), between the number of moles n_{c}(E) of carboxy groups derived from the compound (E) to the number of moles nₐ(A) of amino groups derived from the (meth)acrylate (A) is preferably 0.01 or more and 0.50 or less. When the ratio n_{c}(E)/nₐ(A) is 0.01 or more, the film formability and the film strength of the cured film of the active energy ray-curable adhesive can be effectively improved. When the ratio n_{c}(E)/nₐ(A) is 0.50 or less, more preferably 0.30 or less, still more preferably 0.15 or less, adhesion can be effectively improved by interaction between the tertiary amino groups and the polar groups on the film surface.

The compound (E) preferably has a (meth)acryloyl group and/or a vinyl group. Since the compound (E) also interacts with the (meth)acrylate (A) to be crosslinked, the compound (E) having a photosensitive group as described above improves curability with active energy rays and also improves cured film strength and adhesion.

The active energy ray-curable adhesive of the present invention may contain a photopolymerization initiator according to the active energy ray source. As the photopolymerization initiator, for example, α-aminoalkylphenones, thioxanthones, benzyl ketals, and acylphosphine oxides can be used.

In the active energy ray-curable adhesive of the present invention, additives such as wax, a pigment dispersant, an antifoaming agent, and a leveling agent can be used as other components.

The active energy ray-curable adhesive of the present invention is preferably substantially free of a solvent and a diluent. The solvent herein refers to a substance that does not contain a (meth)acryloyl group and is liquid at 1 atm and 25°C. The phrase "substantially free of a solvent and a diluent" as used herein means that the total content of the solvent and the diluent in the active energy ray-curable adhesive is 0.1 mass% or less. When the active energy ray-curable adhesive of the present invention is substantially free of the solvent, curability of the adhesive with active energy rays can be improved. In addition, it is possible to suppress a situation in which the solvent passes through the film and transfers to the contents.

The acrylic equivalent of the active energy ray-curable adhesive of the present invention is preferably 300 g/eq or more and 1,000 g/eq or less. When the acrylic equivalent is 300 g/eq or more, more preferably 500 g/eq or more, the storage stability is improved. When the acrylic equivalent is 1,000 g/eq or less, more preferably 800 g/eq or less, curability with active energy rays is improved. In the present invention, the acrylic equivalent refers to the number of grams (unit: g/eq) of the active energy ray-curable adhesive required for the amount of (meth)acryloyl groups contained in the active energy ray-curable adhesive to be 1 mol.

Next, a method for producing the active energy ray-curable adhesive of the present invention will be described.

The active energy ray-curable adhesive of the present invention can be obtained by mixing the (meth)acrylate (A), the polyol compound (B), the polyisocyanate compound (C), and if necessary, the (meth)acrylate (D), the compound (E), and other components at room temperature to 80°C.

After or during mixing, defoaming is preferably performed under vacuum or reduced pressure.

In addition, when the polyol compound (B) and the polyisocyanate compound (C) are mixed, a polyurethane forming reaction proceeds to start thickening, and thus it is practically preferable to separately prepare the α liquid of the polyisocyanate compound (C) and the β liquid obtained by mixing other components, mix the two liquids immediately before use, and use the resulting mixture as an adhesive in a laminator.

A first aspect of the method for producing a laminate of the present invention includes a lamination step of bonding the same kind or two or more kinds of films to each other via the active energy ray-curable adhesive of the present invention to form a laminated film, an irradiation step of irradiating the laminated film with an active energy ray, and an aging step of performing aging in this order.

In the lamination step, the active energy ray-curable adhesive of the present invention is applied onto one of the films, and the other film is bonded onto the wet coating film to provide a laminated film. As the one film, a printed material subjected to printing with an ink is suitable, and as the other film, a sealant is suitable.

A second aspect of the method for producing a laminate of the present invention includes a step of applying the active energy ray-curable adhesive to a film, an irradiation step of irradiating the film coated with the adhesive with an active energy ray, a lamination step of bonding the same kind or a different kind of film to the film coated with the adhesive to form a laminated film, and an aging step of performing aging in this order. When the film coated with the adhesive is irradiated with an active energy ray, the other film to be bonded is not interposed, so that curability is improved and the other film is not damaged by the energy ray source, which is preferable.

Examples of the film used in the present invention include polyesters such as polyethylene, polypropylene, polyethylene terephthalate, polybutylene terephthalate, and polylactic acid, polyamides, polyimides, polyalkyl (meth)acrylates, polystyrene, poly(α-methylstyrene), polycarbonates, polyvinyl alcohol, polyvinyl acetal, polyvinyl chloride, and polyvinylidene fluoride.

In addition, such a film further provided with a vapor-deposited thin film layer made of metal such as alumina or a metal compound is also used.

The surface of the film is preferably subjected to corona treatment because the polar functional groups on the surface of the film increase, and the adhesion to the active energy ray-curable adhesive is improved. When the film is a printed material, the surface of an unfigured portion of the film is preferably subjected to corona treatment.

The film whose surface has been subjected to corona treatment may be a ready-made product, or may be one obtained by performing in-line corona treatment on a film before printing or lamination.

The film may have a highly adhesive coating layer, but the cost increases. The active energy ray-curable adhesive of the present invention is suitable because sufficient adhesion to a film that does not have a highly adhesive layer can be exhibited.

As the shape of the film, either a sheetfed film or a roll film can be used. When a thin film for flexible packaging is used, it is preferable to use a roll film and perform roll-to-roll coating and printing.

In the irradiation step, by the irradiation with the active energy ray, the (meth)acryloyl group reacts and is crosslinked by a covalent bond, whereby the active energy ray-curable adhesive is instantaneously cured.

Examples of the active energy ray source used in the irradiation step include ultraviolet rays, electron beams, and gamma rays.

In the case of ultraviolet rays, an ultraviolet irradiation device such as a high-pressure mercury lamp, a xenon lamp, a metal halide lamp, and a light emitting diode (LED) is preferably used. Among them, an LED lamp that saves power and generates less ozone is preferable. As for the wavelength of the LED, a bright line having a wavelength of 350 to 420 nm is preferable from the viewpoint of power saving and cost reduction.

In the case of electron beams, the (meth)acryloyl group is directly radical-excited, and radical polymerization proceeds in the active energy ray-curable adhesive to form a coat. In addition, electron beams have a high penetrating property and can also act on the film. When the film is a polyolefin, radicals are easily generated, and a reaction such as crosslinking between molecules and decomposition occurs, and radical polymerization proceeds between the active energy ray-curable adhesive and the film, so that covalent bonds are formed between the active energy ray-curable adhesive and the film, and higher adhesion can be exhibited. In particular, electron beams with a low acceleration voltage are preferable because electron beams do not require special qualification at the time of use and are easy to handle. Since the penetration depth of the electron beam is determined by the acceleration voltage, the acceleration voltage is preferably 50 kV to 300 kV from the viewpoint of a sufficient penetrating property and damage to the film. The irradiation dose of the electron beam is preferably 10 kGy or more and 100 kGy or less because the amount of radical species generated in the target substance increases but the damage of the film also increases.

By heat treatment in an environment of the range of 40°C or more and 60°C or less in the aging step, the reaction between the polyol compound (B) and the polyisocyanate compound (C) in the adhesive proceeds to increase the molecular weight, whereby the adhesion can be further improved.

### EXAMPLES

Hereinafter, the present invention will be specifically described with reference to examples. However, the present invention is not limited only thereto.

### [Measurement and evaluation methods]

### (1) Amine value

The amine value was measured by a method based on ASTM D2074. An ethanol solution of each (meth)acrylate (A) was prepared, the potential difference was measured with a **0.2-N** hydrochloric acid ethanol solution using a potentiometric titrator, and the inflection point of the obtained titration curve was regarded as the end point. Then, the amount of hydrochloric acid consumed until the inflection point was reached was converted to the potassium hydroxide equivalent.

### (2) Acrylic equivalent

A heavy acetone solution of each active energy ray-curable adhesive with a concentration of 1 mass% was prepared, 0.05 mass% of tetramethylsilane as an internal standard was added, the container was sealed, and ¹H-NMR measurement was performed. The molar ratio was determined from the integration ratio of the peak (δ: 5.8 to 6.5) of the (meth)acrylic group and the peak (δ: -0.05 to +0.05) of the methyl group of tetramethylsilane as an internal standard, and the number of moles of the acrylic groups in the adhesive was calculated to calculate the acrylic equivalent.

### (3) Weight-average molecular weight

The weight-average molecular weight is a value measured at a column temperature of 40°C by gel permeation chromatography (GPC) using tetrahydrofuran for the mobile phase. The column used was Shodex KF-803, and the weight-average molecular weight was calculated in terms of polystyrene.

### (4) Appearance of coating film

The appearance of the coated material with the active energy ray-curable adhesive obtained in each of examples and comparative examples was visually evaluated as follows.
A: No air bubbles were observed, and the appearance was good.
B: Very few air bubbles were observed.
C: Air bubbles or orange peel was observed throughout the entire coated material.

### (5) Peel strength

The sample obtained in each of the examples and comparative examples was cut into a strip shape with a width of 15 mm, and the strip was peeled off at 90° at 300 mm/min using a Tensilon universal tester (RTG-1210 manufactured by ORIENTEC CORPORATION) to measure the peel strength.

The peel strength of the sample immediately after curing with an active energy ray was evaluated as "initial adhesion". In addition, the peel strength of the sample after aging at 40°C for 72 hours (after aging) was evaluated as "adhesion after aging".

As for the initial adhesion, when the peel strength was less than 1.0 N/15 mm, the adhesion was judged to be insufficient, when the peel strength was 1.0 N/15 mm or more and less than 2.0 N/15 mm, the adhesion was judged to be good, and when the peel strength was 2.0 N/15 mm or more, the adhesion was judged to be extremely good.

As for the adhesion after aging, when the peel strength was less than 3.0 N/15 mm, the adhesion was judged to be insufficient, when the peel strength was 3.0 N/15 mm or more and less than 4.0 N/15 mm, the adhesion was judged to be good, and when the peel strength was 4.0 N/15 mm or more, the adhesion was judged to be extremely good.

### (6) Fracture mode

In the peel test after aging of the section (5), the state (fracture mode) at the time of peeling was also observed. In the sample having a multilayer structure, an interlayer where breakage occurs at the time of peeling corresponds to a portion where adhesion is the weakest. Evaluation was performed according to the following A to C.
A: The film was broken.
B: The active energy ray-curable adhesive layer showed a cohesive failure.
C: Peeling was caused between layers of the film/active energy ray-curable adhesive.

Here, the "active energy ray-curable adhesive layer" refers to a layer formed by curing the active energy ray-curable adhesive. The above A is most preferable, the above B is next preferable, and the above C is not preferable.

### [(Meth)acrylate (A)]

The corresponding primary or secondary amine and polyfunctional (meth)acrylate in the following were weighed, and mixed and stirred at 60°C for 4 hours with a mechanical stirrer to allow the Michael addition reaction to proceed, thereby providing a corresponding (meth)acrylate (A).
(A)-1: A bi- or trifunctional (meth)acrylate obtained by the Michael addition reaction of diethanolamine (manufactured by Wakenyaku Co., Ltd.) to pentaerythritol triacrylate ("Miramer" (registered trademark) M340 manufactured by Miwon Specialty Chemical Co., Ltd.) at an equivalent ratio of 5 : 2. Hydroxy groups present. Amine value: 159 mg KOH/g. Weight-average molecular weight: 360.
(A)-2: A bi- or trifunctional (meth)acrylate obtained by the Michael addition reaction of di(2-ethylhexyl)amine (manufactured by Wakenyaku Co., Ltd.) to ditrimethylolpropane tetraacrylate ("Miramer" (registered trademark) M410 manufactured by Miwon Specialty Chemical Co., Ltd.) at an equivalent ratio of 2 : 1. Hydroxy groups absent. Amine value: 118 mg KOH/g. Weight-average molecular weight: 590.
(A)-3: A bifunctional (meth)acrylate obtained by the Michael addition reaction of di(2-ethylhexyl)amine (manufactured by Wakenyaku Co., Ltd.) to EO-modified trimethylolpropane triacrylate ("Miramer" (registered trademark) M3190 manufactured by Miwon Specialty Chemical Co., Ltd.) at an equivalent ratio of 2 : 1. Hydroxy groups absent. Amine value: 79 mg KOH/g. Weight-average molecular weight: 810.
(A)-4: A mono- or bifunctional (meth)acrylate obtained by the Michael addition reaction of octadecylamine (manufactured by Tokyo Chemical Industry Co., Ltd.) to tricyclodecane dimethanol diacrylate ("EBECRYL" (registered trademark) 130 manufactured by Daicel-Allnex Ltd.) at an equivalent ratio of 2 : 1. Hydroxy groups absent. Amine value: 96 mg KOH/g. Weight-average molecular weight: 420.
(A)-5: Dimethylaminoethyl methacrylate (manufactured by Tokyo Chemical Industry Co., Ltd.). The (meth)acrylate (A)-5 is a monofunctional (meth)acrylate. Hydroxy groups absent. Amine value: 357 mg KOH/g. Weight-average molecular weight: 160.
(A)-6: A tetra- or pentafunctional (meth)acrylate obtained by the Michael addition reaction of 1H-benzotriazole (manufactured by Wakenyaku Co., Ltd.) to dipentaerythritol hexaacrylate ("Miramer" (registered trademark) M600 manufactured by Miwon Specialty Chemical Co., Ltd.) at an equivalent ratio of 3 : 1. Hydroxy groups absent. Amine value: 135 mg KOH/g. Weight-average molecular weight: 630.
(A)-7: Mono- to trifunctional (meth)acrylate obtained by the Michael addition reaction of a polyetheramine ("JEFFAMINE" (registered trademark) D-2000 manufactured by Huntsman International LLC.) to pentaerythritol triacrylate ("Miramer" (registered trademark) M340 manufactured by Miwon Specialty Chemical **Co.,** Ltd.) and dimethylaminoethyl methacrylate (manufactured by Tokyo Chemical Industry **Co.,** Ltd.) at an equivalent ratio of 1 : 3 : 1. Hydroxy groups present. Amine value: 91 mg KOH/g. Weight-average molecular weight: 3,200.

### [Polyol compound (B)]

(B)-1: "Takelac" (registered trademark) A-244B manufactured by Mitsui Chemicals, Inc.
(B)-2: "Takelac" (registered trademark) A-246B manufactured by Mitsui Chemicals, Inc.

### [Polyisocyanate compound (C)]

(C)-1: "Takenate" (registered trademark) A-244A manufactured by Mitsui Chemicals, Inc.
(C)-2: "Takenate" (registered trademark) A-246A manufactured by Mitsui Chemicals, Inc.

### [(Meth)acrylate (D)]

(D)-1: EO-modified trimethylolpropane triacrylate ("Miramer" (registered trademark) M3190 manufactured by Miwon Specialty Chemical Co., Ltd.)
(D)-2: Ditrimethylolpropane tetraacrylate ("Miramer" (registered trademark) M410 manufactured by Miwon Specialty Chemical Co., Ltd.).

### [Compound (E)]

(E)-1: Acrylic resin having a photosensitive group and a carboxylic acid (TWR-1001 manufactured by Toray Industries, Inc.). Molecular weight: 30,000, acid value: 105 mg KOH/g.
(E)-2: Acrylic resin having a carboxylic acid (TWR-3001 manufactured by Toray Industries, Inc.). Molecular weight: 27,000, acid value: 200 mg KOH/g.

### [Other (meth)acrylates]

(F)-1: A tri- or higher functional (meth)acrylate having a tertiary amino group obtained by the Michael addition reaction of di(2-ethylhexyl)amine (manufactured by Wakenyaku Co., Ltd.) to dipentaerythritol hexaacrylate ("Miramer" (registered trademark) M600 manufactured by Miwon Specialty Chemical Co., Ltd.) at an equivalent ratio of 6 : 1. Amine value: 66 mg KOH/g.

### [Other additive components]

Photopolymerization initiator: Bis(2,4,6-trimethylbenzoyl)-phenylphosphine oxide ("IRGACURE" (registered trademark) 819 manufactured by BASF SE)
Solvent: Ethyl acetate (manufactured by Wakenyaku Co., Ltd.).

### [Active energy ray-curable adhesive]

Materials were weighed at the composition shown in Table 1, and mixed and dissolved using a hybrid mixer (manufactured by THINKY CORPORATION) to provide an active energy ray-curable adhesive.

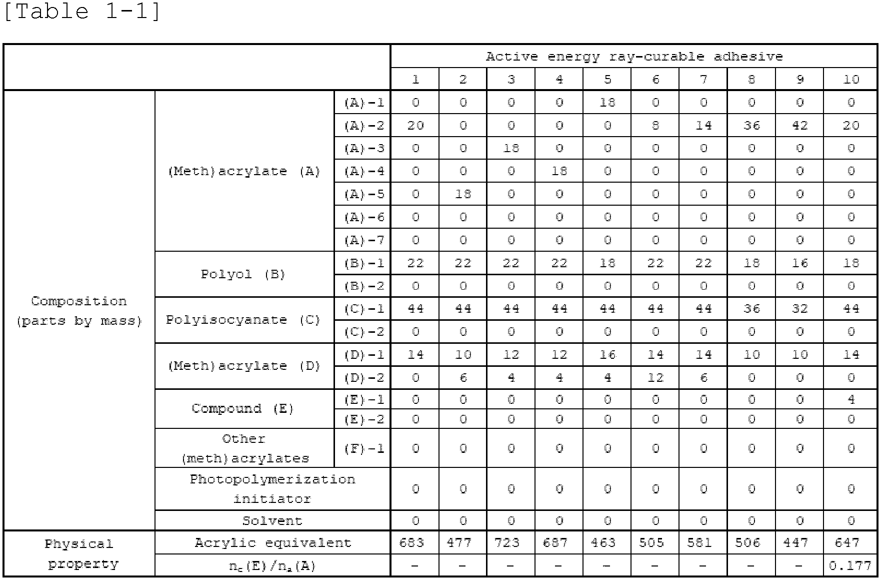

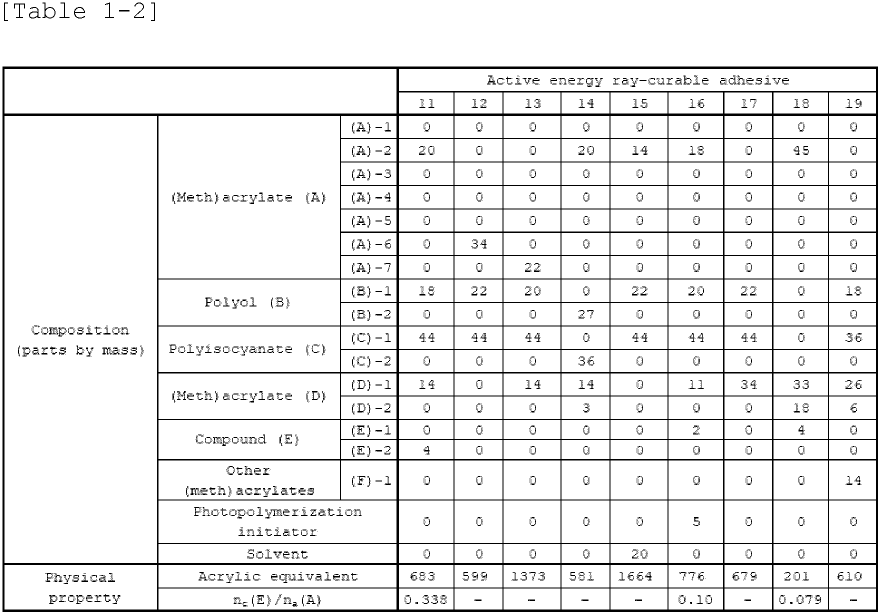

### [Film]

Film 1: 12 µm-thick PET film (E5102 manufactured by TOYOBO CO., LTD.), with a corona treatment layer.

Film 2: 12 µm-thick PET film (FS2000 manufactured by FUTAMURA CHEMICAL CO., LTD.), without a surface treatment.

Film 3: 15 µm-thick polyamide film (ON manufactured by UNITIKA LTD.), with a corona treatment layer.

Film 4: 12 µm-thick barrier film/PET film laminate (1011HG SBR2 manufactured by TORAY ADVANCED FILM Co., Ltd.), without a corona treatment layer.

Film 5: 20 µm-thick OPP film (P2111 manufactured by TOYOBO CO., LTD.), with a corona treatment layer.

Film 6: 12 µm-thick PET film ("Lumirror" (registered trademark) S10 manufactured by Toray Industries, Inc.), without a surface treatment.

### [Method 1 for producing laminate]

Various active energy ray-curable adhesives were applied to various films so that the application amount was about 2.0 g/m², and then sealants (cast polypropylene film (CPP) (ZK-207 manufactured by TORAY ADVANCED FILM Co., Ltd., thickness: 60 µm) were laminated. Then, using an electron beam irradiation apparatus (EC250/30/90LS manufactured by Iwasaki Electric Co., Ltd.), the adhesive was cured by electron beam irradiation from the base film side at an acceleration voltage of 110 kV and an irradiation dose of 30 kGy. Thereafter, aging was performed at 40°C for 72 hours.

### [Method 2 for producing laminate]

Various active energy ray-curable adhesives were applied to various films so that the application amount was about 2.0 g/m², and then sealants (cast polypropylene film (CPP) (ZK-207 manufactured by TORAY ADVANCED FILM Co., Ltd., thickness: 60 µm) were laminated. Then, the adhesive was cured by LED-UV irradiation from the base film side at an irradiation intensity of 8 W/cm² and an irradiation wavelength of 385 nm using an LED ultraviolet irradiation apparatus (UD90 manufactured by Panasonic Industrial Devices SUNX Co., Ltd.). Thereafter, aging was performed at 40°C for 72 hours.

### [Method 3 for producing laminate]

Various films were subjected to corona treatment using a corona treatment apparatus (TEC-4AX manufactured by Kasuga Denki, Inc.) under the condition of a discharge amount E of 200 W·min/m². After that, various active energy ray-curable adhesives were applied so that the application amount was about 2.0 g/m², and sealants (cast polypropylene film (CPP) (ZK-207 manufactured by TORAY ADVANCED FILM Co., Ltd., thickness: 60 µm) were laminated. Then, using an electron beam irradiation apparatus (EC250/30/90LS manufactured by Iwasaki Electric Co., Ltd.), the adhesive was cured by electron beam irradiation from the base film side at an acceleration voltage of 110 kV and an irradiation dose of 30 kGy. Thereafter, aging was performed at 40°C for 72 hours.

### [Method 4 for producing laminate]

After various active energy ray-curable adhesives were applied to various films so that the application amount was about 2.0 g/m², using an electron beam irradiation apparatus (EC250/30/90LS manufactured by Iwasaki Electric Co., Ltd.), the adhesive was cured by electron beam irradiation from the adhesive side at an acceleration voltage of 110 kV and an irradiation dose of 30 kGy. Then, a sealant (cast polypropylene film (CPP) (ZK-207 manufactured by TORAY ADVANCED FILM Co., Ltd., thickness: 60 µm) was laminated. Thereafter, aging was performed at 40°C for 72 hours.

### [Example 1]

Using an active energy ray-curable adhesive 1 as the active energy ray-curable adhesive and the film 1 as the film, a laminate was produced by the method 1 for producing a laminate. As for the peel strength, the initial adhesion was as good as 1.8 N/15 mm, and the adhesion after aging was as very good as 4.5 N/15 mm. In addition, the fracture mode was good (A), and the appearance of the coated material was also good. The results are shown in Table 2.

### [Examples 2 to 15 and Comparative Examples 1 to 3]

Using active energy ray-curable adhesives 2 to 15 and 17 to 19 as the active energy ray-curable adhesive and the film 1 as the film, laminates were produced by the method 1 for producing a laminate. In Examples 2 to 15, the peel strength was all good or more. As the amount of the (meth)acrylate (A) component increased, the initial adhesion tended to be improved, but since the amounts of the polyol compound (B) and the polyisocyanate compound (C) component decreased, the adhesion after aging tended to decrease. In Comparative Example 1 to **3,** the initial adhesion was insufficient when the (meth)acrylate (A) component was absent, and the adhesion after aging was insufficient when the polyol compound (B) and the polyisocyanate compound (C) component were absent. The results are shown in Table **2.**

### [Examples 16 to 20]

Using the active energy ray-curable adhesive 1 as the active energy ray-curable adhesive and the films 2 to 6 as the film, laminates were produced by the method 1 for producing a laminate. The peel strength was good or more for both the initial adhesion and the adhesion after aging and was extremely good particularly for the corona-treated film. The results are shown in Table **3.**

### [Examples 21 and 22]

Using the active energy ray-curable adhesive 16 as the active energy ray-curable adhesive and the films 1 and 2 as the film, laminates were produced by UV curing by the method 2 for producing a laminate. The peel strength was good or more for both the initial adhesion and the adhesion after aging of both films and was extremely good particularly for the corona-treated film 1. The results are shown in Table 3.

### [Examples 23 and 24]

Using the active energy ray-curable adhesive 1 as the active energy ray-curable adhesive and the films 2 and 4 as the film, laminates were produced by the method 3 for producing a laminate. The corona treatment improved both the initial adhesion and the adhesion after aging and made the laminate peel strength extremely good for both films. The results are shown in Table 3.

### [Example 25]

Using the active energy ray-curable adhesive 1 as the active energy ray-curable adhesive and the film 4 as the film, a laminate was produced by the method 4 for producing a laminate. By performing electron beam irradiation before lamination, improvement in initial adhesion due to acceleration of curing was observed. The final laminate peel strength was about the same as that in Example 18, and satisfactory results were obtained. The results are shown in Table 3.

When the laminates of Examples 1 to 25 were bent, the active energy ray-curable adhesive layers were not broken or cracked, and the active energy ray-curable adhesives 1 to 16 had flexibility as cured films. On the other hand, when the laminate of Comparative Example 2 was bent, the active energy ray-curable adhesive layer was broken and cracked, and the active energy ray-curable adhesive 18 did not have flexibility as a cured film.

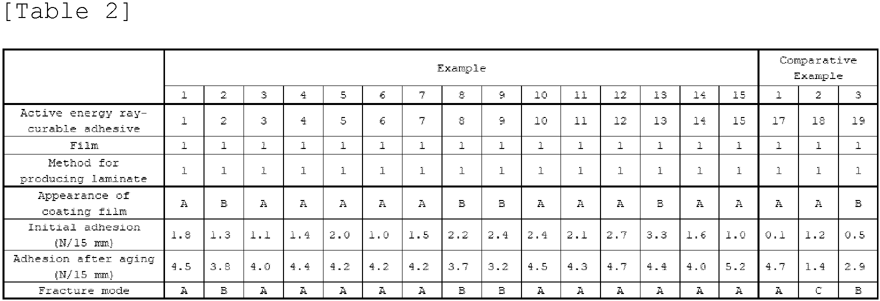

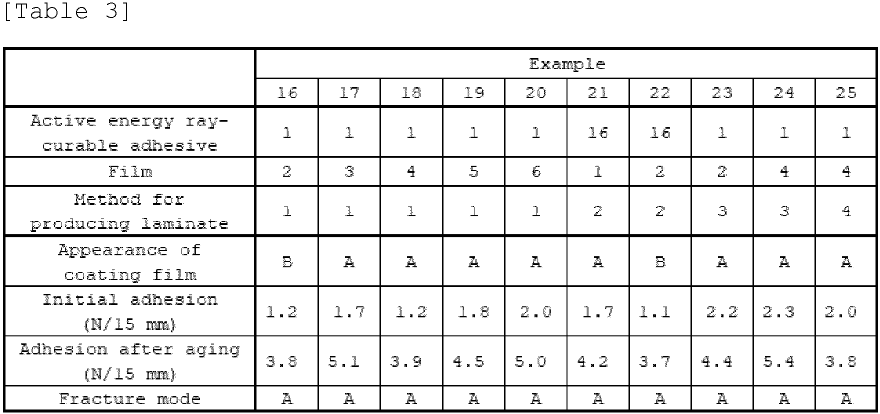

## Claims

1. An active energy ray-curable adhesive comprising: a mono- to tetrafunctional (meth)acrylate (A) having a tertiary amino group; a polyol compound (B); and a polyisocyanate compound (C).

2. The active energy ray-curable adhesive according to claim 1, wherein the (meth)acrylate (A) is represented by Structural Formula (1): 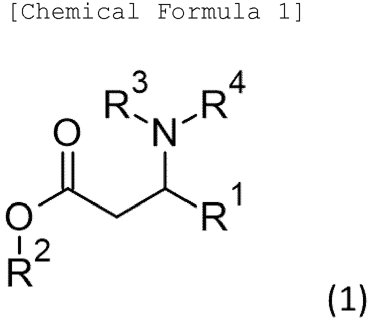 where R¹ represents H or a methyl group, R² represents a monovalent organic group having a (meth)acryloyl group, and R³ and R⁴ each independently represent a monovalent hydrocarbon group or a monovalent organic group containing a heteroatom.

3. The active energy ray-curable adhesive according to claim 1 or 2, wherein the (meth)acrylate (A) has an amine value of 80 mg KOH/g or more.

4. The active energy ray-curable adhesive according to any one of claims 1 to **3,** wherein an acrylic equivalent of the active energy ray-curable adhesive is 300 g/eq or more and 1,000 g/eq or less.

5. The active energy ray-curable adhesive according to any one of claims 1 to **4,** wherein the (meth)acrylate (A) is contained in an amount of 10 mass% or more and 40 mass% or less in the active energy ray-curable adhesive.

6. The active energy ray-curable adhesive according to any one of claims 1 to 5, wherein the (meth)acrylate (A) has a hydroxy group.

7. The active energy ray-curable adhesive according to any one of claims 1 to 6, wherein the (meth)acrylate (A) is represented by Structural Formula (2) or (3): 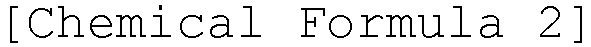 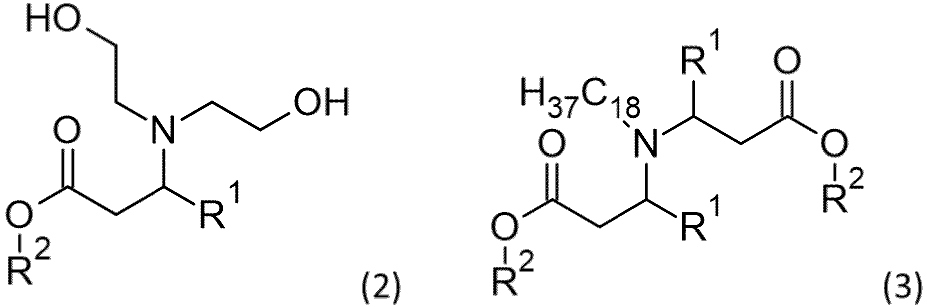 where R¹ represents H or a methyl group, and R² represents a monovalent organic group having a (meth)acryloyl group.

8. The active energy ray-curable adhesive according to any one of claims 1 to 6, wherein the (meth)acrylate (A) is represented by Structural Formula (4): 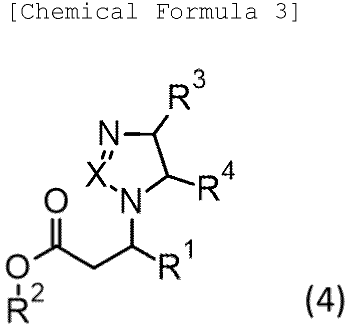 where X represents a nitrogen atom or a carbon atom, R¹ represents H or a methyl group, R² represents a monovalent organic group having a (meth)acryloyl group, and R³ and R⁴ each independently represent a monovalent hydrocarbon group or a monovalent organic group containing a heteroatom, and R³ and R⁴ are independent of each other or are integrated to form a cyclic group.

9. The active energy ray-curable adhesive according to claim 6, wherein the (meth)acrylate (A) has a weight-average molecular weight of 3,000 or more and 100,000 or less.

10. The active energy ray-curable adhesive according to any one of claims 1 to 9, further comprising a polyfunctional (meth)acrylate (D) having a weight-average molecular weight of less than 3,000 and not containing an amino group.

11. The active energy ray-curable adhesive according to any one of claims 1 to 9, wherein a total content of the polyol compound (B) and the polyisocyanate compound (C) is 50 mass% or more.

12. The active energy ray-curable adhesive according to any one of claims 1 to 11, further comprising a compound (E) having a weight-average molecular weight of 3,000 or more and 100,000 or less and having a carboxy group, wherein a ratio, n_{c}(E)/nₐ(A), between a number of moles n_{c}(E) of the carboxy group derived from the compound (E) and a number of moles nₐ(A) of the amino group derived from the (meth)acrylate (A) is 0.01 or more and 0.50 or less.

13. The active energy ray-curable adhesive according to any one of claims 1 to 12, wherein the compound (E) has a (meth)acryloyl group and/or a vinyl group.

14. The active energy ray-curable adhesive according to any one of claims 1 to 13, being substantially free of a solvent and a diluent.

15. A method for producing a laminate, comprising in this order: a lamination step of bonding a same kind or two or more kinds of films to each other via the active energy ray-curable adhesive according to any one of claims 1 to 14 to form a laminated film; an irradiation step of irradiating the laminated film with an active energy ray; and an aging step of performing aging.

16. A method for producing a laminate, comprising in this order: a step of applying the active energy ray-curable adhesive according to any one of claims 1 to 14 to a film; an irradiation step of irradiating the film coated with the adhesive with an active energy ray; a lamination step of bonding a same kind or a different kind of film to the film coated with the adhesive to form a laminated film; and an aging step of performing aging.

17. The method for producing a laminate according to claim 15 or 16, wherein a surface of the film has been subjected to corona treatment.
